# EUROPEAN PATENT SPECIFICATION

(11) **EP 3 484 035 B1**
(45) Date of publication and mention of the grant of the patent: **05.01.2022**
(21) Application number: 17823581.8
(22) Date of filing: 03.07.2017
(51) Int. Cl.: H02M 3/145, H02H 1/06

(54) **HYSTERESIS POWER SUPPLY CIRCUIT**
HYSTERESESTROMVERSORGUNGSSCHALTUNG
CIRCUIT D'ALIMENTATION À HYSTÉRÉSIS

(30) Priority: 08.07.2016 CN 201610536928
(43) Date of publication of application: 15.05.2019
(73) Proprietor: Seari Electric Technology Co., Ltd., Shanghai 200063 (CN); Shanghai Noark Electric Co., Ltd., Shanghai 201614 (CN); Zhejiang Chint Electrics Co., Ltd., Yueqing, Zhejiang 325603 (CN)
(72) Inventor: YI, Xianjun, Shanghai 200063 (CN); CHEN, Lijun, Shanghai 200063 (CN); YIN, Yingjun, Shanghai 200063 (CN)
(74) Representative: Osha Liang
(86) International application number: PCT/CN2017/091418
(87) International publication number: WO 2018/006769

(56) References cited:
- EP-A1- 0 130 254
- EP-A2- 0 421 204
- CN-A- 103 051 185
- CN-A- 106 026 656
- CN-U- 201 846 066
- CN-U- 204 481 570
- CN-U- 205 141 657
- CN-U- 205 864 260
- US-A1- 2004 264 088
- US-A1- 2011 095 732

## Description

### BACKGROUND OF THE INVENTION

### 1. Field of the Invention

Embodiments of the present invention relate to the field of low voltage electrical appliances, and more particularly to a power supply circuit for supplying power to circuit breakers.

### 2. The Related Art

With the continuous improvement of the low-voltage electrical appliance industry, plastic case circuit breakers (molded case circuit breakers) are evolving toward more intelligent and communication-capable. The intelligence of molded case circuit breakers is mainly realized by electronic devices, and therefore, a power supply circuit for supplying power to molded case circuit breakers is also required. The reliability and stability of intelligent controllers are inseparable from the improvement of power supply circuit performance and reliability. At the same time, the power supply circuit is prone to overvoltage, overcurrent, breakdown, electromagnetic interference and other problems due to conversion in strong and weak current circuits. It is imperative to improve its stability and anti-interference ability so that the power supply circuit can not only receive high power input without being damaged, but also provide a stable output under low power input. Therefore, it is imperative to design a power supply circuit that is simple, effective, stable, safe and reliable.

A power supply circuit comprising a fast saturation current transformer, a rectifier circuit, a switching circuit unit, and a control unit is proposed in the prior art. The control unit controls the switching circuit unit to be turned-on or turned-off, and the control unit uses a positive feedback hysteresis unit having an operational amplifier. In this scheme, an operational amplifier is used to generate a hysteresis signal. Thus, the circuit is complicated, costly, and prone to failure.

A power supply circuit comprising an input filter circuit, a rectification filter circuit, a single-ended switch conversion circuit, a switching power supply control circuit, and a secondary rectification filter circuit, is also proposed in the prior art. The power supply circuit can detect an amplitude of an energy output by an energy coil when the energy coil is separately powered, and realize the control of a two-way power supply according to the amplitude. In this scheme, an isolated switching power supply is used, such that the control circuit has a complicated structure and large size, which is not suitable for a miniaturized molded case circuit breaker.

A power supply circuit is also provided in the prior art, comprising an overvoltage sampling module for determining whether an overvoltage signal is generated, an undervoltage sampling module for determining whether an undervoltage signal is generated, and a signal generation module for generating a protection signal with the overvoltage or undervoltage signal, and a signal hysteresis module for delayed processing of the protection signal and outputting the processed protection signal. In this scheme, the hysteresis effect is achieved by changing a resistor divider value, which requires complicated calculations and operations, and separate sampling of the overvoltage signal and the undervoltage signal makes the circuit more complicated. In addition, an auxiliary DC power supply is also required.

A power supply circuit is further provided in the prior art, comprising a voltage sampling circuit, a control circuit, a hysteresis circuit, power supply input voltage terminal, DC bias voltage terminal, and switching power supply control terminal. The input sampling circuit uses three resistors in series to form a resistor divider. The control circuit uses an error amplifier, and the error amplifier is connected to a bias resistor to control the level of protection point switching power supply control terminal according to the sampling signal of the input sampling circuit. When the switching power supply is higher than a set value, the switching power supply is turned off to protect the switching power supply. Three series resistors are used as a voltage divider resistor in this scheme, making the calculation more complicated and an auxiliary DC power supply must also be used.

EP 0 421 204 A2 describes an overcurrent protection apparatus. A current in an alternating current electric line is detected by a current transformer. The output of the current transformer is rectified by a rectifier and a switching means and a resistor are connected in series across the output terminals of the rectifier. A control circuit comprising a capacitor, a comparator and a reference voltage generator is coupled in parallel with the switching means through a diode. When the DC output voltage exceeds a predetermined voltage based on the reference voltage of the reference voltage generator, the comparator outputs a signal for closing the switching means and the voltage which is applied to the control circuit is limited to a predetermined value.

EP 0 130 254 A1 describes a power supply for energizing a trip signal generator and for selectively operating a device in response to the detection by the trip signal generator of overcurrent in an alternating current line. The power supply receives input of full-wave rectified current that is directly proportional to the alternating current in the line. A regulator circuit is also provided to power the trip signal generator and other circuitry. When current initially flows in the line, the regulator rapidly produces an output voltage approximately equal to the input voltage up to a first voltage level. When the input voltage exceeds that level, the output voltage of the regulator increases at a slower rate than the input voltage to permit regulation of the output voltage. When energized, the output voltage is regulated at a predetermined constant level. The power supply also includes an energy storage circuit for supplying the input voltage to the regulator and to a circuit interrupter when desired. A control portion in conjunction with a switch portion alternately shunts current away from or permits current to flow to the energy storage portion and regulator portion to maintain the voltage across the energy storage portion within a predetermined range. The predetermined voltage range of the energy storage circuit is shifted higher upon receipt of a signal from the trip signal generator to increase the amount of energy stored in the energy storage circuit for interrupting the circuit in the line.

CN 204 481 570 U describes an intelligent controller for a circuit breaker. The controller comprises a control processor, a signal processing circuit, and a power circuit. The input end of the signal processing circuit is connected with a hollow sensor, and is used for obtaining a current signal of a main circuit. The output end of the signal processing circuit is connected with an A/D conversion interface of the control processor, and can enable a processed current signal to be supplied to the control processor for judgment and processing through analog-digital conversion. The power circuit is connected with a quickly saturated mutual inductor and an auxiliary power supply, and can be used for supplying working power to the controller. Moreover, a voltage sampling circuit which is used for sampling a voltage value of the auxiliary power supply and transmitting the voltage value to the control processor for judgment and processing is connected between the auxiliary power supply and the A/D conversion interface of the control processor.

US 2004/264088 A1 describes a method and apparatus for an undervoltage relay control apparatus monitoring voltage of the circuit breaker. The undervoltage relay controller apparatus comprises a housing with a latch assembly mounted in the housing. The latch assembly includes a latch mechanism and a solenoid, with the solenoid in selective contact with the latch mechanism. An electrical circuit, having a voltage input and a voltage output is mounted in the housing and coupled to the latch assembly. Wherein a control voltage input to the electrical circuit is conditioned, independently of parameters of the solenoid, and wherein if the received control voltage input is less than a predefined voltage, the electrical circuit will remove power to the solenoid allowing the solenoid to contact the latch mechanism and trip the circuit breaker. According to US 2004/264088 A1, a capacitor is provided to add volt capacitance to enhance a gate voltage signal through a transistor. Zener diodes provide over-voltage protection for this transistor and a voltage detector. A first resistor provides several volts of switching hysteresis and a second resistor provides the sourcing voltage to turn the gate of said transistor.

In sum, the prior art generally has the problems of a complicated circuit, large volume, multiple devices, complicated calculation process, and high cost.

### SUMMARY

The invention is defined by independent claim 1. Embodiments of the present invention disclose a hysteresis power supply circuit, comprising: an input circuit; a switch combination circuit; a sampling and control circuit; a feedback circuit; and an output circuit. The input circuit includes a first diode connected to a power supply input terminal, rectifies a power supply input and protects the input terminal. The switch combination circuit is connected to the input circuit and is turned on or off to control an output power of a power supply output terminal. The sampling and control circuit samples an output voltage and compares the output voltage with a reference voltage, and the sampling and control circuit controls the switch combination circuit to be turned on or off according to the comparison result. The feedback circuit is connected between the switch combination circuit and the sampling and control circuit. The switch combination circuit outputs a positive feedback signal to the sampling and control circuit through the feedback circuit, and the positive feedback signal causes a hysteresis effect on a comparison action of a reference power supply chip. The output circuit includes a fourth diode connected to the switch combination circuit, filters an output of the switch combination circuit and protects the output terminal,. The output of the output circuit serves as an output of the hysteresis power supply circuit. The switch combination circuit comprises a first field effect transistor, a second field effect transistor, and a voltage regulator tube, and controls the turn-on or turn-off of the first and second field effect transistor and the voltage regulator tube to control an output power of the power supply output, a point between the first and the second field effect transistor being a feedback point. The second field effect transistor comprises a large current power filed effect transistor. The first field effect transistor comprises an enhanced field effect transistor, and a gate of the large current power field effect transistor is connected to a drain of the enhanced field effect transistor. The sampling and control circuit comprises a reference power supply chip that generates a reference voltage, a first sampling resistor and a second sampling resistor, a point between the first and second sampling resistors being a sampling point. The output voltage sampled by the sampling point is supplied to the reference power supply chip. The sampling and control circuit controls the turn-on or turn-off of the first field effect transistor, the second field effect transistor and the voltage regulator tube in the switch combination circuit according to the comparison result, the connection point serving as a feedback point. A ratio of resistance values of the first sampling resistor and the second sampling resistor is 1: [(Vout/Vref)-1], where Vout is the output voltage, Vref is the reference voltage, and a point between the first and second sampling resistor is a sampling point. The feedback circuit is a feedback resistor connected between the feedback point and the sampling point. The sampling point is connected to a reference terminal of the reference power supply chip. A gate of the first field effect transistor is connected to an anode of the voltage regulator tube, a cathode of the voltage regulator tube is connected to a cathode of the reference power supply chip, and to an anode of the fourth diode via a fourth resistor, and a source of the first field effect transistor is connected to an anode of the reference power supply chip.

In one embodiment, the output of the output circuit supplies power to a controller in a molded case circuit breaker.

In one embodiment, the output of the output circuit supplies power to a controller in a molded case circuit breaker and a magnetic flux controller of a tripper in the molded case circuit breaker.

In one embodiment, the output circuit is also connected to an auxiliary DC power supply. The output circuit comprises a plurality of paths between the power supply input terminal, the auxiliary DC power supply, the power supply output terminal, and a tripping magnetic flux power supply output terminal.

In one embodiment, the output circuit comprises a filter circuit.

The hysteresis power supply circuit according to one or more embodiments of the present invention uses a reference power supply chip instead of an operational amplifier to generate a control signal, which makes the circuit simpler in structure and lower in cost. The feedback circuit directly connects the feedback point and the sampling point, and feeds back to the reference power supply chip. The circuit is simple but can increase a hysteresis of the reference power supply chip, so that the control of the reference power supply chip is more stable and the anti-interference ability is stronger. As a large current power FET is disposed in the circuit, which can absorb and consume excess power when a large current input occurs, and protect the back circuit from large current impact, so that the upper limit of the input current is significantly improved.

In general, the hysteresis power supply circuit according to one or more embodiments of the present invention is small in size, low in cost, small in device loss, long in service life, and capable of reducing high-frequency electromagnetic interference.

### BRIEF DESCRIPTION OF THE DRAWINGS

The above and other features, aspects and advantages of the present invention will become more apparent from the description of the appended claims, wherein:
FIG. 1 is a block diagram showing the structure of a hysteresis power supply circuit in accordance with an embodiment of the present invention.
FIG. 2 illustrates a circuit schematic of the first embodiment of a hysteretic power supply circuit in accordance with the present invention.
FIG. 3 illustrates a circuit schematic of the second embodiment of a hysteretic power supply circuit in accordance with the present invention.

### DETAILED DESCRIPTION OF EMBODIMENTS

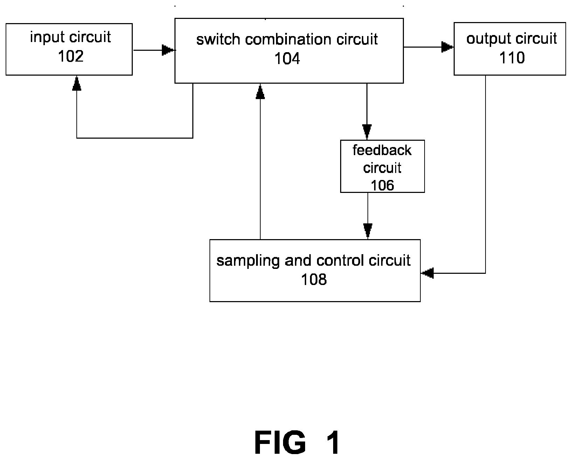

Referring to FIG. 1, FIG. 1 is a block diagram showing the structure of a hysteresis power supply circuit in accordance with an embodiment of the present invention. As shown in FIG. 1, the hysteresis power supply circuit of the present invention comprises an input circuit 102, a switch combination circuit 104, a feedback circuit 106, a sampling and control circuit 108, and an output circuit 110.

The input circuit 102 is connected to a power supply input terminal, and the input circuit 102 rectifies a power supply input and provides protection for the input terminal.

The switch combination circuit 104 is connected to the input circuit 102 and is turned on or off to control an output power of a power supply output terminal. In one embodiment, the switch combination circuit 104 comprises a field effect transistor and a voltage regulator tube, and controls the output power of the power supply output terminal by controlling the turn-on or turn-off of the field effect transistor and the voltage regulator tube.

The sampling and control circuit 108 samples an output voltage and compares the output voltage with a reference voltage, and the sampling and control circuit 108 controls the switch combination circuit to be turned on or off according to the comparison result. In one embodiment, the sampling and control circuit 108 comprises a reference power supply chip that produces the reference voltage. The sampling and control circuit 108 controls the turn-on or turn-off of the field effect transistor and the voltage regulator tube in the switch combination circuit 104 according to the comparison result.

The feedback circuit 106 is connected between the switch combination circuit 104 and the sampling and control circuit 108. The switch combining circuit 104 outputs a positive feedback signal to the sampling and control circuit 108 through the feedback circuit 106, which causes the comparison action of the reference power supply chip to produce a hysteresis effect. The positive feedback signal enables the reference power supply chip to be more stable based on the comparison of the reference voltage and the sampled output voltage, avoiding frequent switching of the switch combination circuit due to voltage fluctuation, and thus reducing energy loss and electromagnetic interference due to frequent switching.

The output circuit 110 is connected to the switch combination circuit 104, filters the output of the switch combination circuit 104 and provides protection for the output terminal, and the output of the output circuit 110 serves as an output of the hysteresis power supply circuit. The output of the output circuit 110 can supply power to a controller in a molded case circuit breaker and/or provide a trip voltage for a magnetic flux controller of a tripper in the molded case circuit breaker.

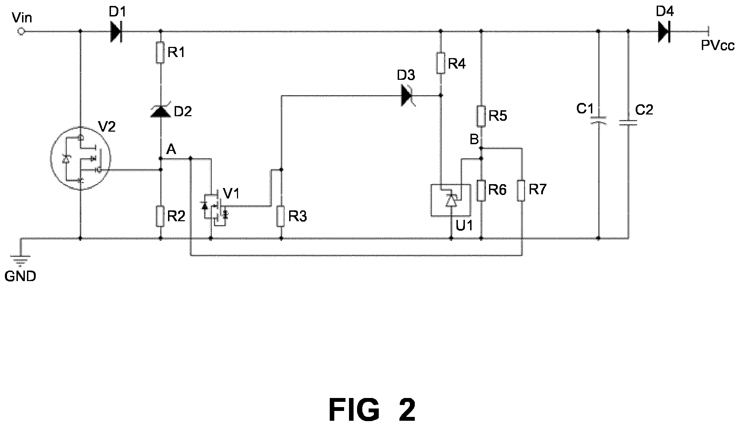

Referring to FIG.2, FIG. 2 illustrates a circuit schematic of the first embodiment of a hysteretic power supply circuit in accordance with the present invention. In the first embodiment shown in FIG. 2, the input circuit 102 is a first diode D1. The first diode D1 functions to rectify and protects a power supply input. The switch combination circuit 104 comprises a first FET VI, a second FET V2, a second diode D2, a third diode D3, a first resistor R1, a second resistor R2, a third resistor R3, and a fourth resistor R4. The first FET VI is an N-channel enhancement type field effect transistor, and the second FET V2 is an N-channel large current power field effect transistor. The second diode D2 and the third diode D3 function as a voltage regulator and are voltage regulator tubes. The feedback circuit 106 is a seventh resistor R7. The sampling and control circuit 108 comprises a reference power supply chip U1, a fifth resistor R5, and a sixth resistor R6. The reference power supply chip U1 is a three-terminal adjustable shunt reference power supply chip, and the reference power supply chip U1 generates a reference power supply. The fifth resistor R5 and the sixth resistor R6 are used as a voltage dividing resistor, and the fifth resistor R5 and the sixth resistor R6 are used to sample the output voltage and supply it to the reference power supply chip U1. The output circuit 110 comprises a fourth diode D4, a first capacitor C1, and a second capacitor C2, and the first capacitor C1 and the second capacitor C2 constitute a filter circuit.

The power supply input terminal Vin is connected to the anode of the first diode D1 and the drain of the second FET (N-channel large current power FET) V2. The cathode of the first diode D1 is connected to the first end of the first resistor R1, the first end of the fourth resistor R4 and the first end of the fifth resistor R5; the first resistor R1, the fourth resistor R4, and the fifth resistor R5 all implement the function of a voltage dividing resistor, and the role here is to pull up potential; the first resistor R1, the fourth resistor R4, and the fifth resistor R5 are used as pull-up resistors. The second end of the first resistor R1 is connected to the cathode of the second diode (voltage regulator tube) D2. The anode of the second diode D2 is connected to the gate of the second FET V2, the drain of the first FET (N-channel enhancement field effect transistor) VI, the first end of the seventh resistor R7, and the second resistor R2. The intersection point of the above circuits is the feedback point A. The seventh resistor R7 is a feedback resistor, the second resistor R2 is a voltage dividing resistor, and the second resistor R2 functions to pull down potential and is used as a pull-down resistor. The source of the second FET V2 is grounded. The second end of the seventh resistor (feedback resistor) R7 is connected to the reference pole of the reference power supply chip (three-terminal adjustable shunt reference power supply chip) U1, and the above-mentioned circuit intersection is the sampling point B. The second end of the second resistor R2 is grounded. The gate of the first FET VI is connected to the anode of the third diode (voltage regulator tube) D3 and the first end of the third resistor R3, and the source of the first FET VI is grounded. The third resistor R3 is a voltage dividing resistor, and the third resistor R3 functions to pull down potential and is used as a pull-down resistor. The second end of the third resistor R3 is grounded. The cathode of the third diode D3 is connected to the cathode of the reference power supply chip U1 and the second end of the fourth resistor R4. The anode of the reference power supply chip U1 is grounded. The reference pole of the reference power supply chip U1 is connected to the second end of the seventh resistor R7, the second end of the fifth resistor R5, and the first end of the sixth resistor R6. The seventh resistor R7 is a feedback resistor. The feedback resistor, i.e., the seventh resistor R7, is connected between the feedback point and the sampling point, i.e., point A and point B, thereby forming a positive feedback of the switch combination circuit 104 to the sampling and control circuit 108. The fifth resistor R5 and the sixth resistor R6 are voltage dividing resistors, where the reference voltage is divided. The first end of the fifth resistor R5 is connected to the first end of the fourth resistor R4 and is also connected to the anode of the fourth diode D4. The second end of the sixth resistor R6 is grounded. The first capacitor C1 and the second capacitor C2 are connected between the anode of the fourth diode D4 and the ground, and the first capacitor C1 and the second capacitor C2 are filter capacitors. The cathode of the fourth diode D4 is connected to the power supply output terminal PVcc.

In the first embodiment shown in FIG. 2, the output circuit 110 has only one power supply output PVcc for supplying power to a controller in a molded case circuit breaker.

In the first embodiment shown in Fig. 2, the model or parameter of each component is selected as follows: The reference power supply chip is a three-terminal adjustable shunt reference power supply chip, which can be selected from the TL431AIDBZR model. The first FET VI is an N-channel enhancement type field effect transistor, which can be selected from the 2N7002K model. The second FET is an N-channel large current power FET, which can be selected from the STD60NF06 model. The second diode D2 is a voltage regulator tube, which can be selected from the BZX84-C15 model. The third diode D3 is a voltage regulator tube, which can be selected from the BZX84-C5V1 model. The first diode D1 and the second diode D4 can be selected from the M7 model. The first resistor R1 is a pull-up resistor having a resistance value of 1k. The second resistor R2 is a pull-down resistor having a resistance value of 10k. The third resistor R3 is a pull-down resistor having a resistance value of 10k. The fourth resistor R4 is a pull-up resistor having a resistance value of 4.7k. The fifth resistor R5 and the sixth resistor R6 serve as voltage dividing and sampling resistors, and the resistor ratio satisfies the following requirements: R5/R6=(Vout/Vref)-1, where Vref is the reference voltage generated by the reference terminal of the reference power supply chip. The resistance values of R5 and R6 are selected according to the requirements of the output voltage Vout. In one embodiment, the fifth resistor R5 has a resistance value of 100k, and the sixth resistor R6 has a resistance value of 10k. The seventh resistor R7 is a feedback resistor having a resistance value of 100k. The first capacitor C1 and the second capacitor C2 are filter capacitors. The capacitance of the first capacitor C1 is 220uF, and the capacitance of the second capacitor C2 is 100nF.

The working principle of the hysteresis power supply circuit of the first embodiment is as follows. When an external power supply voltage is just turned on, the input voltage of the power supply input terminal Vin rises slowly from zero. The output voltage value of the output terminal PVcc is less than a preset value, and the sampling resistors R5 and R6 of appropriate resistor ratio are selected to sample the output voltage value. A voltage dividing value is generated at the series connection point of the resistors R5 and R6, and the voltage dividing value is compared with a reference voltage Vref generated by the reference terminal of the three-terminal adjustable shunt reference power supply chip U1. In one embodiment, the reference voltage Vref is 2.5V. If the above-mentioned voltage dividing value is less than the reference voltage of 2.5V, the three-terminal adjustable shunt reference power supply chip U1 is in an off state, and the cathode thereof is maintained at a high level, at which time the voltage regulator tube D3 is turned on, so that the gate of the first FET VI is at a high level, and the first FET VI is in an on state. The drain of the first FET VI is grounded such that the second FET V2 is turned off and does not affect the continued rise of the input voltage.

When the input voltage of the power supply input terminal Vin rises slowly, and the output voltage value of the power supply output terminal PVcc reaches and exceeds the preset value, the voltage dividing value obtained by sampling the output voltage values by the sampling resistors R5 and R6 is compared with the reference voltage of the reference terminal of the three-terminal adjustable shunt reference power supply chip U1. When the voltage dividing value reaches and is greater than the reference voltage of 2.5V, the three-terminal adjustable shunting reference power supply chip U1 is in an on state, the cathode voltage of which is pulled low, and outputs the 2V turn-on voltage. The turn-on voltage causes the voltage regulator tube D3 to turn off, and the gate of the first FET V1 is pulled to the low level by the pull-down resistor R3, and the first FET VI is in turn-off state. Due to the voltage division of the resistor R1, the voltage regulator tube D2 and the resistor R2, the drain voltage of the first FET VI is greater than 7V, and the feedback point A positively feeds the voltage of the point back to the reference terminal of the three-terminal adjustable shunt reference power supply chip U1. The three-terminal adjustable shunt reference power supply chip U1 is continuously turned on, and the second FET V2 is turned on. After the second FET V2 is turned on, the power supply input terminal Vin is grounded. Since the second FET is an N-channel large current power FET, the energy input to the power supply input is consumed by the second FET V2 in the form of thermal energy. The input voltage of the power supply input terminal Vin gradually decreases, but due to the positive feedback of the feedback point A, the three-terminal adjustable shunt reference power supply chip U1 remains turned on until the voltage of the feedback point A decreases to a certain value, such that the sampling point B is again smaller than the reference voltage 2.5V, and the three-terminal adjustable shunt reference power supply chip U1 is turned off again. The turn-on of first FET VI makes the second FET V2 turns off again, and the input voltage of the power supply input terminal Vin is no longer lowered. But at this time, the level of the feedback point A is still low level, and is fed back to the reference point of the three-terminal adjustable shunt reference power supply chip U1, so that the three-terminal adjustable shunt reference power supply chip U1 is continuously turned off until the input voltage of the power supply input terminal Vin rises again to the preset value.

The positive feedback signal of the feedback circuit causes a hysteresis effect on the comparison action of the reference power supply chip. The positive feedback signal enables the reference power supply chip to be more stable based on the comparison of the reference voltage and the sampled output voltage, avoiding frequent switching of the switch combination circuit due to voltage fluctuation, and thus reducing energy loss and electromagnetic interference due to frequent switching.

The second FET in switch combination circuit 104 is an N-channel large current power FET, such as the STD60NF06 model. The large current power FET can absorb excess power in the event of a large current surge and consume power in the form of thermal energy, thereby increasing the input current limit, and the input current limit can be increased from tens of milliamps to several amps.

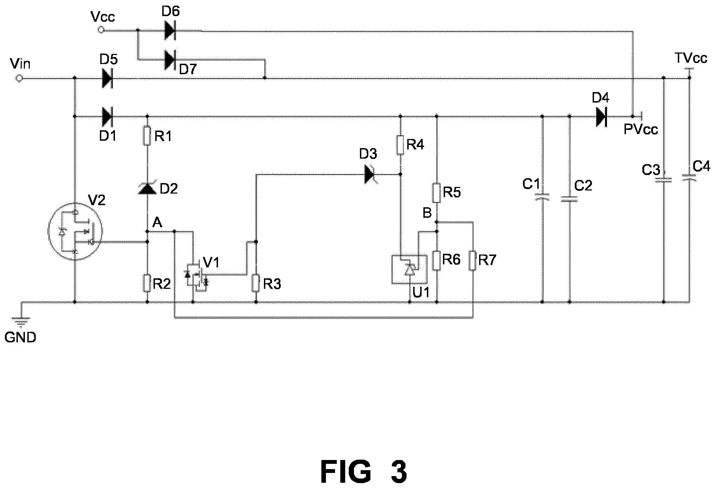

Referring to FIG. 3, FIG. 3 illustrates a circuit schematic of the second embodiment of a hysteretic power supply circuit in accordance with the present invention. As shown in FIG. 3, the second embodiment makes some modifications to the output circuit 110 based on the circuit schematic of the first embodiment. In the second embodiment, the output circuit 110 comprises a fourth diode D4, a fifth diode D5, a sixth diode D6, a seventh diode D7, a first capacitor C1, and a second capacitor C2, a three capacitor C3 and a fourth capacitor C4. The output circuit 110 has two inputs and two outputs. In terms of output, in addition to the power supply output terminal PVcc, the tripping magnetic flux power supply output terminal TVcc is also included. In terms of input, in addition to the power supply input terminal Vin, an auxiliary DC power supply Vcc is included. As shown in FIG. 3, through the fifth diode D5, the sixth diode D6, and the seventh diode D7, the output circuit 110 establishes a plurality of paths between the two input terminals and the two output terminals. The fifth diode D5, the sixth diode D6, and the seventh diode D7 described above all function to rectify and protect the power supply input.

Input circuit 102 is still the first diode D1. The first diode D1 functions to rectify and protect a power supply input. The switch combination circuit 104 still comprises a first FET VI, a second FET V2, a second diode D2, a third diode D3, a first resistor R1, a second resistor R2, a third resistor R3, and a fourth resistor R4. The first FET VI is an N-channel enhancement type field effect transistor, and the second FET V2 is an N-channel large current power field effect transistor. The second diode D2 and the third diode D3 function as a voltage regulator and are voltage regulator tubes. The feedback circuit 106 is a seventh resistor R7. The sampling and control circuit 108 comprises a reference power supply chip U1, a fifth resistor R5, and a sixth resistor R6. The reference power supply chip U1 is a three-terminal adjustable shunt reference power supply chip, and the reference power supply chip U1 generates a reference power supply. The fifth resistor R5 and the sixth resistor R6 are used as a voltage dividing resistor, and the fifth resistor R5 and the sixth resistor R6 are used to sample the output voltage and supply it to the reference power supply chip U1.

The circuit diagram of the first embodiment remains unchanged as part of the circuit diagram of the second embodiment, providing a current path from the power supply input terminal Vin to the power supply output terminal PVcc, and the power supply output terminal PVcc is used to supply power to a controller in a molded case circuit breaker.

The anode of the fifth diode D5 is connected to the power supply input terminal Vin, and the cathode of the fifth diode D5 is connected to the tripping magnetic flux power supply output terminal TVcc. The anode of the sixth diode D6 is connected to the auxiliary DC power supply Vcc, and the cathode of the sixth diode D6 is connected to the power supply output terminal PVcc. The anode of the seventh diode D7 is connected to the auxiliary DC power supply Vcc, and the cathode of the seventh diode D7 is connected to the tripping magnetic flux power supply output terminal TVcc. The first capacitor C1 and the second capacitor C2 constitute a filter circuit. The third capacitor C3 and the fourth capacitor C4 are connected between the magnetic flux power output terminal TVcc and the ground, and the third capacitor C3 and the fourth capacitor C4 are filter capacitors. The third capacitor C3 and the fourth capacitor C4 form a filter circuit for tripping magnetic flux power supply output terminal TVcc, and the first capacitor C1 and the second capacitor C2 form a filter circuit for the power supply output terminal PVcc. The tripping magnetic flux power supply output terminal TVcc provides a trip voltage for a flux controller of a tripper in a molded case circuit breaker. In the second embodiment, there are two output terminals Pvcc and TVcc, so that the output of the output circuit 110 can supply power to the controller in the molded case circuit breaker and at the same time provide the trip voltage to the magnetic flux controller of the tripper in the molded case circuit breaker.

In the selection of the device model, the fifth diode D5, the sixth diode D6 and the seventh diode D7 can be the same model as that of the first diode D1 and the second diode D4, for which M7 model can be selected. The third capacitor C3 has a capacitance value of 100nF, and the fourth capacitor C4 has a capacitance value of 220uF.

In terms of the working principle, since the input circuit 102, the switch combining circuit 104, the feedback circuit 106, and the sampling and control circuit 108 in the second embodiment are the same as the first embodiment, the working process and principle of the second embodiment are the same as the first embodiment, which will not be repeated here.

The hysteresis power supply circuit of the present invention uses a reference power supply chip instead of an operational amplifier to generate a control signal, which makes the circuit simpler in structure and lower in cost. The feedback circuit directly connects the feedback point and the sampling point, and feeds back to the reference power supply chip. The circuit is simple but can increase the operation hysteresis of the reference power supply chip, so that the control of the reference power supply chip is more stable and the anti-interference ability is stronger. As a large current power FET is disposed in the circuit, which can absorb and consume excess power when a large current input occurs, and protect the back circuit from large current impact, so that the upper limit of the input current is significantly improved.

In general, the hysteresis power supply circuit of the present invention is small in size, low in cost, small in device loss, long in service life, and capable of reducing high-frequency electromagnetic interference.

The above embodiments are provided to those skilled in the art to implement or use the present invention, and those skilled in the art can make various modifications or changes to the above embodiments without departing from the scope of protection of the present invention, which is not limited by the above embodiments, but is determined by the claims.

## Claims

1. A hysteresis power supply circuit, comprising:
an input circuit (102) including a first diode (D1) that is connected to a power supply input terminal (Vin) and rectifies a power supply input and protects the input terminal (Vin);
a switch combination circuit (104) that is connected to the input circuit (102) and is turned on or off to control an output power of a power supply output terminal (PVcc);
a sampling and control circuit (108) that samples an output voltage, compares the output voltage with a reference voltage, controls the switch combination circuit (104) to be turned on or off according to the comparison result;
a feedback circuit (106) that is connected between the switch combination circuit (104) and the sampling and control circuit (108), wherein the switch combination circuit (104) outputs a positive feedback signal to the sampling and control circuit (108) through the feedback circuit (106), and the positive feedback signal causes a hysteresis effect on a comparison action of a reference power supply chip; and
an output circuit (110) including a fourth diode (D4) that is connected to the switch combination circuit (104), filters an output of the switch combination circuit (104) and protects the power supply output terminal (PVcc), wherein the output of the output circuit (110) serves as an output of the hysteresis power supply circuit,
wherein the switch combination circuit (104) comprises a first field effect transistor (V1), a second field effect transistor (V2), and a voltage regulator tube (D3), and controls the turn-on or turn-off of the first and second filed effect transistor (V1, V2) and the voltage regulator tube (D3) to control an output power of the power supply output, wherein the gate of the second field effect transistor is connected to the drain of the first field effect transistor and a point between the
drain of the first field effect transistor (V1) and the gate of the second field effect transistor (V2) being a feedback point (A),
wherein the feedback point (A) is configured to positively feed the voltage of the point back to a reference terminal of a reference power supply chip (U1), and wherein the second field effect transistor (V2) comprises a large current power field effect transistor,
wherein the first field effect transistor (V1) comprises an enhanced field effect transistor, a gate of the large current power field effect transistor is connected to a drain of the enhanced field effect transistor, and the power supply circuit is configured such that the second field effect transistor (V2) turns-off when the first field effect transistor (V1) turns-on,
wherein the sampling and control circuit (108) comprises the reference power supply chip (U1) that generates a reference voltage, a first sampling resistor (R5) and a second sampling resistor (R6), a point between the first and second sampling resistors (R5, R6) being a sampling point (B), and configured such that an output voltage sampled by the sampling point (B) is supplied to the reference power supply chip (U1),
wherein the sampling and control circuit (108) controls the turn-on or turn-off of the first field effect transistor (V1), the second field effect transistor (V2) and the voltage regulator tube (D3) in the switch combination circuit (104) according to the comparison result,
wherein a ratio of resistance values of the first sampling resistor (R5) and the second sampling resistor (R6) is 1: [(Vout/Vref)-1], where Vout is the output voltage, Vref is the reference voltage,
wherein the feedback circuit (106) is a feedback resistor (R7) connected between the feedback point (A) and the sampling point (B), the sampling point (B) being connected to a reference terminal of the reference power supply chip (U1), and
wherein a gate of the first field effect transistor (V1) is connected to an anode of the voltage regulator tube (D3), a cathode of the voltage regulator tube (D3) is connected to a cathode of the reference power supply chip (U1), and to an anode of the fourth diode (D4) via a fourth resistor (R4), and a source of the first field effect transistor (V1) is connected to an anode of the reference power supply chip (U1).

2. The hysteresis power supply circuit of claim 1, wherein the output of the output circuit (110) is configured to supply power to a controller in a molded case circuit breaker.

3. The hysteresis power supply circuit of claim 1, wherein the output of the output circuit (110) is configured to supply power to a controller in a molded case circuit breaker and a magnetic flux controller of a tripper in the molded case circuit breaker.

4. The hysteresis type power supply circuit of claim 3, wherein
the output circuit (110) is also configured to be connected to an auxiliary DC power supply (Vcc); and
the output circuit (110) comprises a plurality of paths between the power supply input terminal (Vin), the auxiliary DC power supply (Vcc), the power supply output terminal (PVcc), and a tripping magnetic flux power supply output terminal (TVcc).

5. The hysteresis power supply circuit of any of claims 1-4, wherein the output circuit (110) comprises a filter circuit.

## Patentansprüche

1. Hysterese-Stromversorgungsschaltung, aufweisend:
eine Eingangsschaltung (102), die eine erste Diode (D1) aufweist, die mit einem Stromversorgungseingangsanschluss (Vin) verbunden ist und einen Stromversorgungseingang gleichrichtet und den Eingangsanschluss (Vin) schützt;
eine Schaltkombinationsschaltung (104), die mit der Eingangsschaltung (102) verbunden ist und zur Steuerung einer Ausgangsleistung eines Stromversorgungsausgangsanschlusses (PVcc) ein- oder ausgeschaltet wird;
eine Erfassungs- und Steuerschaltung (108), die eine Ausgangsspannung erfasst, die Ausgansspannung mit einer Referenzspannung vergleicht und Ein- und Ausschalten der Schaltkombinationsschaltung (104) entsprechend des Vergleichsergebnisses steuert;
eine Feedback-Schaltung (106), die zwischen der Schaltkombinationsschaltung (104) und der Erfassungs- und Steuerungsschaltung (108) verbunden ist, wobei die Schaltkombinationsschaltung (104) ein positives Feedback-Signal an die Erfassungs-und Steuerungsschaltung (108) durch die Feedback-Schaltung (106) ausgibt, und das positive Feedback-Signal einen Hysterese-Effekt auf eine Vergleichsmaßnahme eines Referenzstromversorgungs-Chip ausübt; und
eine Ausgangsschaltung (110), die ein vierte Diode (D4) aufweist, die mit der Schaltkombinationsschaltung (104) verbunden ist, einen Ausgang der Schaltkombinationsschaltung (104) filtert und den Stromversorgungsausgangsanschluss (PVcc) schützt, wobei der Ausgang der Ausgangsschaltung (110) als Ausgang der Hysterese-Stromversorgungsschaltung dient,
wobei die Schaltkombinationsschaltung (104) einen ersten Feldeffekttransistor (V1), einen zweiten Feldeffekttransistor (V2) und einen Spannungsregler (D3) aufweist, und das An- und Ausschalten des ersten und des zweiten Feldeffekttransistors (V1, V2), und den Spannungsregler (D3) steuert, um eine Ausgangsleistung des Stromversorgungsausgangs zu steuern, wobei das Gate des zweiten Feldeffekttransistors mit dem Drain des ersten Feldeffekttransistors verbunden ist und ein Punkt zwischen dem Drain des ersten Feldeffekttransistors (V1) und dem Gate des zweiten Feldeffekttransistors (V2) ein Feedback-Punkt (A) ist,
wobei der Feedback-Punkt (A) so konfiguriert ist, dass er die Spannung des Punktes positiv zu einem Referenzanschluss eines Referenzstromversorgungs-Chips (U1) zurückführt und wobei der zweite Feldeffekttransistor (V2) einen großen Stromleistungsfeldeffekttransistor aufweist,
wobei der erste Feldeffekttransistor (V1) einen verstärkten Feldeffekttransistor aufweist, ein Gate des großen Stromleistungsfeldeffekttransistors mit einem Drain des verstärkten Feldeffekttransistors verbunden ist und die Stromversorgungsschaltung so konfiguriert ist, dass der zweite Feldeffekttransistor (V2) ausschaltet, wenn der erste Feldeffekttransistor (V1) anschaltet,
wobei die Erfassungs- und Steuerungsschaltung (108) den Referenzstromversorgungs-Chip (U1), der eine Referenzspannung bereitstellt, einen ersten Erfassungswiderstand (R5) und einen zweiten Erfassungswiderstand (R6) aufweist, wobei ein Punkt zwischen dem ersten und dem zweiten Erfassungswiderstand (R5, R6) ein Erfassungspunkt (B) darstellt und so konfiguriert ist, dass eine an dem Erfassungspunkt (B) erfasste Ausgangsspannung dem Referenzstromversorgungs-Chip (U1) zugeführt wird,
wobei die Erfassungs- und Steuerungsschaltung (108) das An- und Ausschalten des ersten Feldeffekttransistors (V1), des zweiten Feldeffekttransistors (V2) und den Spannungsregler (D3) in der Schaltkombinationsschaltung (104) entsprechend des Vergleichsergebnisses steuert,
wobei ein Verhältnis zwischen Widerstandswerten des ersten Erfassungswiderstands (R5) und des zweiten Erfassungswiderstands (R6) 1:[(Vout/Vref)-1] beträgt, wobei Vout die Ausgansspannung und Vref die Referenzspannung ist,
wobei die Feedback-Schaltung (106) ein Feedback-Widerstand (R7) ist, der zwischen dem Feedback-Punkt (A) und dem Erfassungspunkt (B) verbunden ist, wobei der Erfassungspunkt (B) mit einem Referenzanschluss des Referenzstromversorgungs-Chips (U1) verbunden ist, und
wobei ein Gate des ersten Feldeffekttransistors (V1) mit einer Anode des Spannungsreglers (D3) verbunden ist, eine Kathode des Spannungsreglers (D3) mit einer Kathode des Referenzstromversorgungs-Chips (U1) und mit einer Anode der vierten Diode (D4) über einen vierten Widerstand (R4) verbunden ist, und eine Source des ersten Feldeffekttransistors (V1) mit einer Anode des Referenzstromversorgungs-Chips (U1) verbunden ist.

2. Hysterese-Stromversorgungsschaltung gemäß Anspruch 1, wobei der Ausgang der Ausgangsschaltung (110) so konfiguriert ist, dass eine sich in einem Kompaktleistungsschalter befindliche Steuerung mit Strom versorgt wird.

3. Hysterese-Stromversorgungsschaltung gemäß Anspruch 1, wobei der Ausgang der Ausgangsschaltung (110) so konfiguriert ist, dass eine sich in einem Kompaktleistungsschalter befindliche Steuerung und eine sich in dem Kompaktleistungsschalter befindliche Magnetflusssteuerung eines Trippers mit Strom versorgt wird.

4. Hysterese-Stromversorgungsschaltung gemäß Anspruch 3, wobei
die Ausgangsschaltung (110) ebenfalls so konfiguriert ist, dass sie mit einer Gleichstrom-Hilfsspannungsversorgung (Vcc) verbunden ist; und
die Ausgangschaltung (110) eine Mehrzahl von Pfaden zwischen dem Stromversorgungseingangsanschluss (Vin), der Gleichstrom-Hilfsspannungsversorgung (Vcc), des Stromversorgungsausgangsanschlusses (PVcc) und einem Tripping-Magnetflussstromversorgungsausgangsanschlusses (TVcc) aufweist.

5. Hysterese-Stromversorgungsschaltung gemäß einem der Ansprüche 1 bis 4, wobei die Ausgangsschaltung (110) eine Filterschaltung aufweist.

## Revendications

1. Circuit d'alimentation à hystérésis, comprenant :
un circuit d'entrée (102) incluant une première diode (D1) qui est connectée à une borne d'entrée d'alimentation (Vin) et qui redresse une entrée d'alimentation et protège la borne d'entrée (Vin) ;
un circuit de combinaison de commutation (104) qui est connecté au circuit d'entrée (102) et mis en marche ou à l'arrêt pour commander une puissance de sortie d'une borne de sortie d'alimentation (PVcc) ;
un circuit d'échantillonnage et de commande (108) qui échantillonne une tension de sortie, compare la tension de sortie avec une tension de référence, commande la mise en marche ou à l'arrêt du circuit de combinaison de commutation (104) en fonction du résultat de la comparaison ;
un circuit de rétroaction (106) qui est connecté entre le circuit de combinaison de commutation (104) et le circuit d'échantillonnage et de commande (108), dans lequel le circuit de combinaison de commutation (104) émet un signal de rétroaction positif vers le circuit d'échantillonnage et de commande (108) par le circuit de rétroaction (106), et le signal de rétroaction positif produit un effet d'hystérésis sur une action de comparaison d'une puce d'alimentation de référence ; et
un circuit de sortie (110) incluant une quatrième diode (D4) qui est connectée au circuit de combinaison de commutation (104), qui filtre une sortie du circuit de combinaison de commutation (104) et protège la borne de sortie d'alimentation (PVcc), dans lequel la sortie du circuit de sortie (110) sert de sortie au circuit d'alimentation à hystérésis,
dans lequel le circuit de combinaison de commutation (104) comprend un premier transistor à effet de champ (V1), un second transistor à effet de champ (V2), et un tube régulateur de tension (D3), et commande la mise en marche ou à l'arrêt du premier et du second transistor à effet de champ (V1, V2) et le tube régulateur de tension (D3) pour commander une puissance de sortie de la sortie d'alimentation, dans lequel la grille du second transistor à effet de champ est connectée au drain du premier transistor à effet de champ, et un point entre le drain du premier transistor à effet de champ (V1) et la grille du second transistor à effet de champ (V2) étant un point de rétroaction (A),
dans lequel le point de rétroaction (A) est configuré pour réalimenter positivement la tension du point vers une borne de référence d'une puce d'alimentation de référence (U1), et dans lequel le second transistor à effet de champ (V2) comprend un transistor à effet de champ de puissance à fort courant,
dans lequel le premier transistor à effet de champ (V1) comprend un transistor à effet de champ amélioré, une grille du transistor à effet de champ de puissance à fort courant, connectée à un drain du transistor à effet de champ amélioré, et le circuit d'alimentation est configuré de telle sorte que le second transistor à effet de champ (V2) est mis à l'arrêt lorsque le premier transistor à effet de champ (V1) est mis en marche,
dans lequel le circuit d'échantillonnage et de commande (108) comprend la puce d'alimentation de référence (U1) qui génère une tension de référence, une première résistance d'échantillonnage (R5) et une seconde résistance d'échantillonnage (R6), un point entre la première et la seconde résistance d'échantillonnage (R5, R6) étant un point d'échantillonnage (B) et configuré de telle sorte qu'une tension de sortie échantillonnée par le point d'échantillonnage (B) soit fournie à la puce d'alimentation de référence (U1),
dans lequel le circuit d'échantillonnage et de commande (108) commande la mise en marche ou à l'arrêt du premier transistor à effet de champ (V1), du second transistor à effet de champ (V2) et du tube régulateur de tension (D3) dans le circuit de combinaison de commutation (104) en fonction du résultat de la comparaison,
dans lequel un rapport de valeurs de résistance de la première résistance d'échantillonnage (R5) et de la seconde résistance d'échantillonnage (R6) est 1 : [(Vout/Vref)-1], où Vout est la tension de sortie, et Vref est la tension de référence,
dans lequel le circuit de rétroaction (106) est une résistance de rétroaction (R7) connectée entre le point de rétroaction (A) et le point d'échantillonnage (B), le point d'échantillonnage (B) étant connecté à une borne de référence de la puce d'alimentation de référence (U1), et
dans lequel une grille du premier transistor à effet de champ (V1) est connectée à une anode du tube régulateur de tension (D3), une cathode du tube régulateur de tension (D3) est connectée à une cathode de la puce d'alimentation de référence (U1), et à une anode de la quatrième diode (D4) par une quatrième résistance (R4), et une source du premier transistor à effet de champ est connectée à une anode de la puce d'alimentation de référence (U1)

2. Circuit d'alimentation à hystérésis selon la revendication 1, dans lequel la sortie du circuit de sortie (110), est configurée pour alimenter en énergie un contrôleur dans un disjoncteur à boîtier moulé.

3. Circuit d'alimentation à hystérésis selon la revendication 1, dans lequel la sortie du circuit de sortie (110), est configurée pour alimenter en énergie un contrôleur dans un disjoncteur à boîtier moulé et un contrôleur de flux magnétique d'un déclencheur dans le disjoncteur à boîtier moulé.

4. Circuit d'alimentation à hystérésis selon la revendication 3, dans lequel le circuit de sortie (110) est également configuré pour être connecté à une alimentation CC auxiliaire (Vcc) ; et
le circuit de sortie (110) comprend une pluralité de chemins entre la borne d'entrée d'alimentation (Vin), l'alimentation CC auxiliaire (Vcc), la borne de sortie d'alimentation (PVcc), et une borne de sortie d'alimentation de flux magnétique de déclenchement (TVcc).

5. Circuit d'alimentation à hystérésis selon l'une quelconque des revendications 1 à 4, dans lequel le circuit de sortie (110) comprend un circuit de filtrage.
